# EUROPÄISCHE PATENTSCHRIFT

(11) **EP 0 916 245 B1**
(45) Veröffentlichungstag und Bekanntmachung des Hinweises auf die Patenterteilung: **21.07.2004**
(21) Anmeldenummer: 98120810.1
(22) Anmeldetag: 03.11.1998
(51) Int. Cl.: A01B 79/00

(54) **Verfahren zum Einsatz von landwirtschaftlichen Maschinen**
Method for putting on agricultural maschines
Méthode pour engager des machines agricoles

(30) Priorität: 06.11.1997 DE 19749099
(43) Veröffentlichungstag der Anmeldung: 19.05.1999
(73) Patentinhaber: Amazonen-Werke H. Dreyer GmbH & Co. KG, 49205 Hasbergen (DE)
(72) Erfinder: Marquering, Johannes Dipl.-Ing., 49176 Hilter-Borgloh (DE)

(56) Entgegenhaltungen:
- EP-A- 0 749 677
- EP-A- 0 843 958
- WO-A-86/05353
- WO-A-95/02220
- DE-A- 4 342 171
- US-A- 5 668 719

## Beschreibung

Die Erfindung betrifft ein Verfahren zum Einsatz von landwirtschaftlichen Maschinen gemäß des Oberbegriffes des Patentanspruches 1.

Ein derartiges Verfahren ist beispielsweise in der DE-OS 195 22 481 beschrieben. Bei diesem Verfahren wird der erforderliche Leistungsbedarf einer Bodenbearbeitungsmaschine oder eines Bodenbearbeitungsgerätes auf einem geeigneten Aufzeichnungsmittel aufgezeichnet.

Der Erfindung liegt die Aufgabe zugrunde, dieses bekannte Verfahren hinsichtlich des Auswerteverfahrens und der Materialausbringung zu verbessern.

Diese Aufgabe wird erfindungsgemäß durch die kennzeichnenden Merkmale des Anspruchs 1 gelöst. Infolge dieser Maßnahmen wird überprüft, ob und in welchem Ausmaß Abweichungen vom jeweiligen Sollwert bei jedem Arbeitsvorgang tatsächlich vorliegen. Hiermit wird die Voraussetzung dafür geschaffen, daß evtl. Abweichungen entsprechend bei dem nächsten Arbeits- bzw. Ausbringvorgang Berücksichtigung finden können

Eine vorteilhafte Auswertung laßt sich dadurch erreichen, daß die Daten zunächst auf einem Aufzeichnungsmittel aufgezeichnet werden und anschließend auf einer stationare Datenverarbeitungsanlage, beispielsweise dem Hof-PC ausgewertet werden

Durch den Soll- / Istwertvergleich läßt sich in vorteilhafter Weise die Effektivität der tatsächlich durchgeführten Arbeitsgänge feststellen.

Durch die Überprüfung kann weiterhin festgestellt werden, ob das Feld lückenlos und/oder in Teilbereichen mehrfach abgearbeitet wurde.

Bei einem Einsatz mit einer Verteilmaschine ist vorgesehen, dass in dem Bordcomputersystem bei Verwendung einer Verteilmaschine, wie beispielsweise Düngerstreuer oder Feldspritze, die von einer Sämaschine angelegten Fahrgassen für das bedüngende bzw. zu pflegende Feld hinterlegt sind, dass eine Überprüfung stattfindet, ob jede Fahrgasse einmal befahren und/oder Material verteilt worden ist.

Hierbei kann bei einer Verteilmaschine vorgesehen sein, dass das Ergebnis der Überprüfung bei der Erstellung der Überprüfung bei der Erstellung der Ausbringdaten für den nachfolgenden Ausbring- oder Arbeitsgang Berücksichtigung findet. Hierdurch wird gewährleistet, dass auftretende Fehler sich nicht addieren, sondern durch den nachfolgenden Arbeitsgang eliminiert werden können.

Weiterhin lässt sich ein Vergleich der tatsächlich abgearbeiteten Fläche mit der theoretisch zu bearbeitenden Fläche durchführen. Hierbei können somit die Daten aktualisiert werden.

Um immer eine effektivere und bessere Bestellung des Feldes zu erreichen, ist vorgesehen, dass beim Sävorgang die ausgebrachte Menge aufgezeichnet wird, dass in Abhängigkeit der ausgebrachten Menge Saatgut, der Ernteergebnisse der vorgehenden Jahre und/oder der Bodenkartenwerte, die Daten für den aktuell anstehenden Arbeits- und Ausbringvorgang festgelegt werden. Durch diese Vorgehensweise kann das Ausbringen von Saatgut, Dünger und Pflanzenschutzmitteln von Jahr zu Jahr optimiert werden.

Weiterhin ist vorgesehen, dass die theoretisch ausgebrachte Gesamtmenge mit der tatsächlich ausgebrachten Menge verglichen wird und dass aus diesem Vergleich Rückschlüsse für die zukünftigen Düngerabgaben, Pflanzenschutzmittelgaben etc. gezogen werden. Hierdurch wird eine immer bessere und genauere Bestandsführung, gestützt auf die gesammelten Daten, möglich.

Eine möglichst genaue Anpassung an die tatsächlich vorherrschenden Gegebenheiten und eine bessere teilflächenspezifische Bewirtschaftung läßt sich dadurch erreichen, daß bei der Erstellung der Applikationskarten, insbesondere im Hinblick auf die teilflächenspezifische Bearbeitung und der teilbreitenspezifischen Ausbringmengenregelung die Wurfweiten eines Schleuderstreuers für jeden von einer Schleuderscheibe erzeugten Streufächer berücksichtigt werden.

Weitere Einzelheiten der Erfindung sind der Beispielsbeschreibung und der Zeichnung zu entnehmen. Die Zeichnung zeigt
in systematischer Darstellung das erfindungsgemäße Verfahren.

Auf dem Hof-PC 1 wird anhand der vorhandenen Daten, wie Bodenwerte, Nährstoffversorgung des Bodens, die flächenspezifische Applikationskarte 2 erstellt, nach welcher beispielsweise Stickstoff ausgebracht werden soll. Mittels eines elektronischen Datenträgers, beispiels einer PC-Card 3 werden diese Daten in den Bordrechner 4, der die landwirtschaftliche Verteilmaschine 5, beispielsweise den Düngerstreuer steuert, übertragen. Anhand dieser in dem Bordcomputer 4 eingegebenen Daten der Applikationskarte 2 werden in Verbindung mit einem Standortbestimmungssystem 6, beispielsweise DGPS, die Ausbring- und/oder Dosierorgane der Verteilmaschine 5 entsprechend den im Bordrechner 4 entsprechend der Applikationskarte hinterlegten Daten gesteuert.

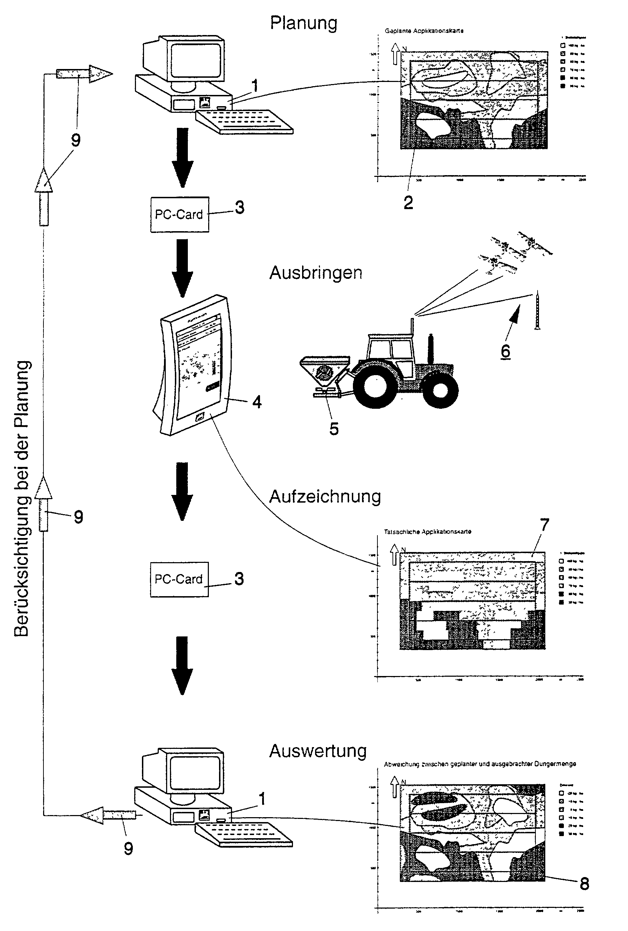

Während des Ausbringvorganges werden in einem als Speicher ausgebildeten Aufzeichnungsmittel in dem Bordcomputer 4 die Daten des Ausbringvorganges aufgezeichnet. Hierbei wird entsprechend des Standortes teilflächenspezifisch die tatsächliche Ausbringmenge, wie die Abbildung 7 zeigt, aufgezeichnet. Weiterhin kann aufgezeichnet werden, welche angelegten Fahrgassen befahren worden sind.

Nach dem Ausbringvorgang werden die in dem Bordcomputer 4 aufgezeichneten Daten mittels eines Datenübertragungsträger, beispielsweise einer PC-Card 3 auf den Hof-PC übertragen. Auf dem Hof-PC findet eine Auswertung statt. Bei dieser Auswertung werden die aufgezeichneten Daten (Istwert) des Arbeitsvorganges entsprechend der tatsächlichen Applikationskarte 7 mit den theoretisch vorgebenen Daten (Sollwert) des Arbeitsvorganges entsprechend der geplanten Applikationskarte auf dem jeweiligen Feld verglichen. Bei dieser Auswertung auf dem Hof-PC ergibt sich die Applikationskarte 8.

In diesem Auswertevorgang kann die Effektivität der tatsächlich durchgeführten Arbeitsgänge festgestellt werden. Desweiteren kann durch den Soll-Istwertvergleich überprüft werden, ob das Feld lückenlos und/oder in Teilbereichen mehrfach abgearbeitet wurde. Desweiteren kann festgestellt werden, ob jede Fahrgasse einmal befahren und/oder Material verteilt worden ist.

Weiterhin wird das Ergebniss der Überprüfung bei der Erstellung der Ausbringdaten für den nachfolgenden Arbeits- oder Ausbringvorgang berücksichtigt, wie durch die Pfeile 9 symbolisiert wird. Hierbei kann bei der Planung für den nächsten Arbeitsvorgang, wenn beispielsweise bei dem vorhergehenden Arbeitsgang zu viel oder zu wenig Material ausgebracht worden ist, mit entsprechend korrigierten Ausbringdaten und Applikationskarten der nächste Arbeitsgang durchgeführt werden.

Desweiteren kann ein Vergleich der tatsachlich abgearbeiteten Fläche mit der theoretisch zu bearbeiteten Fläche durchgeführt werden, um so genauere Daten zu erhalten.

Desweiteren wird beispielsweise bei einem Sävorgang die ausgebrachte Menge aufgezeichnet, wobei dann in Abhängigkeit der ausgebrachten Menge Saatgut, der Ernteergebnisse der vorhergehenden Jahre, und/oder der Bodenkartenwerte die Daten für den aktuellen anstehenden Arbeits- und Ausbringvorgang festgelegt werden. Diese Daten gehen dann, wie schematisch dargestellt ist, bei der nächsten Planung in die neu geplante Applikationskarte mit ein.

Desweiteren kann die theoretisch ausgebrachte Gesamtmenge mit der tatsächlich ausgebrachten Menge verglichen werden. Aus diesem Vergleich können Rückschlüsse für die zukünftigen Düngergaben gezogen werden.

Weiterhin wird bei der Erstellung und Planung der Applikationskarte, insbesondere im Hinblick auf die teilflächenspezifische Bearbeitung und der teilbreitenspezifischen Ausbringmengenregelung die Wurfweite eines Schleuderstreuers für jeden von der Schleuderscheibe erzeugten Streufächer berücksichtigt, so daß eine möglichst genaue teilflächenspezifische Bearbeitung entsprechend der in der Applikationskarte vorgegebenen Daten erfolgen kann.

Wie vorstehend deutlich wurde, wird in quasi einem Kreislauf mit immer weiteren, aktualisierten Daten eine immer genauere Planung der Arbeitsvorgänge, wie Saatgutausbringung, Dungerausbnngung, Pflanzenschutzmittelausbringung moglich.

## Patentansprüche

1. Verfahren zum Einsatz von landwirtschaftlichen Verteilmaschinen mit einem elektronischen Bordcomputersystem mit Standortbestimmungssystem und Aufzeichnungsmittel zum Aufzeichnen von Daten des Arbeitsvorganges, **dadurch gekennzeichnet, daß** während des Ausbringvorganges und/oder nach Abschluß des Ausbringvorganges die aufgezeichneten Daten, Istwert, des Ausbringvorganges mit den theoretisch vorgegebenen Daten, Sollwert, des Ausbringvorganges auf dem jeweiligen Feld verglichen werden, daß in dem Bordcomputersystem (4) Applikationskarten (2) hinterlegt sind, daß die Materialverteilung auf dem Aufzeichnungsmittel (4) während des Ausbringvorganges laufend aufgezeichnet wird, daß eine Überprüfung der ausgebrachten Materialmenge in Abhängigkeit der Verteilung mit dem in der Applikationskarte (2) hinterlegten Daten erfolgt.

2. Verfahren nach Anspruch 1, **dadurch gekennzeichnet, daß** die Daten zunächst auf einem Aufzeichnungsmittel (4) aufgezeichnet werden und anschließend auf einer stationären Datenverarbeitungsanlage, beispielsweise Hof-PC (1), ausgewertet werden.

3. Vorrichtung nach einem oder mehreren der vorstehenden Ansprüche, **dadurch gekennzeichnet, daß** durch den Soll- / Istwertvergleich jeweils die Effektivität der tatsächlich durchgeführten Ausbringvorgänge festgestellt wird.

4. Verfahren nach einem oder mehreren der vorstehenden Ansprüche, **dadurch gekennzeichnet, daß** durch den Soll- Istwertvergleich überprüft wird, ob das Feld lückenlos und/oder in Teilbereichen mehrfach abgearbeitet wurde.

5. Verfahren nach einem oder mehreren der vorstehenden Ansprüche, **dadurch gekennzeichnet, daß** in dem Bordcomputersystem (4) bei Verwendung einer als Düngerstreuer ausgebildeten Verteilmaschine, die von einer Sämaschine angelegten Fahrgassen für das zu düngende Feld hinterlegt sind, daß eine Überprüfung stattfindet, ob jede Fahrgasse einmal befahren und/oder Material verteilt worden ist.

6. Verfahren nach Anspruch 1, **dadurch gekennzeichnet, daß** das Ergebnis der Überprüfung bei der Erstellung der Ausbringdaten für den nachfolgenden Ausbring- und/oder Arbeitsvorgang berücksichtigt wird.

7. Verfahren nach einem oder mehreren der vorstehenden Ansprüche, **dadurch gekennzeichnet, daß** ein Vergleich der tatsächlich abgearbeiteten Fläche mit der theoretisch zu bearbeitenden Fläche durchgeführt wird.

8. Verfahren nach einem oder mehreren der vorstehenden Ansprüche, **dadurch gekennzeichnet, daß** beim Sävorgang die ausgebrachte Menge aufgezeichnet wird, daß in Abhängigkeit der ausgebrachten Menge Saatgut, der Ernteergebnisse der vorhergehenden Jahre, und/oder der Bodenkartenwerte, die Daten für den aktuell anstehenden Arbeits- und Ausbringvorgang festgelegt werden.

9. Verfahren nach einem oder mehreren der vorstehenden Ansprüche, **dadurch gekennzeichnet, daß** die theoretisch ausgebrachte Gesamtmenge mit der tatsächlich ausgebrachten Menge verglichen wird, und daß aus diesem Vergleich Rückschlüsse für die zukünftigen Düngergaben gezogen werden.

10. Verfahren nach einem oder mehreren der vorstehenden Ansprüche, **dadurch gekennzeichnet, daß** bei der Erstellung der Applikationskarten insbesondere im Hinblick auf die teilflächenspezifische Bearbeitung und der teilbreitenspezifischen Ausbringmengenregelung die Wurfweiten eines Schleuderstreuers für jeden von einer Schleuderscheibe erzeugten Streufächer berücksichtigt werden.

## Claims

1. Method for using agricultural distributors which have an electronic on-board computer system with a position defining system and recording means for the recording of the data of the operation, **characterised in that** during the depositing operation and/or after termination of the depositing operation the recorded data, the actual value, of the depositing operation is compared to the theoretically predetermined data, the required value, of the depositing operation on the respective field, **in that** application cards (2) are stored in the on-board computer system (4), **in that** the material distribution is continuously recorded on the recording means (4) during the depositing operation, **in that** a checking of the amount of material deposited in dependence on the distribution is effected with the data filed on the application card (2).

2. Method according to claim 1, **characterised in that** the data is initially recorded on a recording means (4) and is then evaluated on a stationary data processing system, for example a PC (1) at the farm.

3. Apparatus according to one or more of the preceding claims, **characterised in that** the effectiveness of the depositing operations actually carried out is ascertained by means of comparing the actual value and the required value.

4. Method according to one or more of the preceding claims, **characterised in that** a check is made by means of the required/actual value comparison as to whether the field has been worked without any gaps and/or in multiple partial regions.

5. Method according to one or more of the preceding claims, **characterised in that**, where a distributor configured in the form of a fertiliser broadcaster is used, the tramlines applied by a seed drill for the field to be fertilised are filed on the on-board computer (4), **in that** a check takes place as to whether each tramline has been covered once and/or whether material has been distributed.

6. Method according to claim 1, **characterised in that** the result of the check is taken into consideration when drawing up the depositing data for the subsequent depositing operation and/or working cycle.

7. Method according to one or more of the preceding claims, **characterised in that** a comparison is effected between the surface actually worked and the surface to be cultivated in a theoretical manner.

8. Method according to one or more of the preceding claims, **characterised in that** the amount deposited during the sowing operation is recorded, **in that** the data for the working cycle and depositing operation currently pending is determined in dependence on the amount of seed material deposited, the harvest results of the preceding years, and/or the soil card values.

9. Method according to one or more of the preceding claims, **characterised in that** the overall amount deposited in a theoretical manner is compared with the amount actually deposited, and **in that** conclusions are drawn from this comparison for the future fertiliser applications.

10. Method according to one or more of the preceding claims, **characterised in that** when drawing up the application cards, more especially with regard to the cultivation of specific partial areas and to the regulation of the amount distributed in specific partial widths, the throwing widths of a centrifugal spreader are taken into consideration for each depositing compartment generated by a centrifugal disc.

## Revendications

1. Procédé de mise en oeuvre de machines agricoles distributrice à l'aide d'un système électronique d'ordinateur embarqué comprenant un système de localisation et des moyens d'enregistrement pour enregistrer les données de l'opération de travail,
**caractérisé en ce que**
pendant l'opération de distribution et/ou à la fin de l'opération de distribution, on compare les données enregistrées c'est-à-dire les données réelles de l'opération d'épandage aux données théoriques prédéfinies c'est-à-dire les valeurs de consigne de l'opération d'épandage dans le champ respectif, on enregistre des cartes d'application (2) dans le système d'ordinateur embarqué (4), on enregistre en continu la distribution de produits sur le moyen d'enregistrement (4) pendant l'opération de distribution,
et on vérifie la quantité de produit distribué en fonction de la répartition à l'aide des données enregistrées dans la carte d'application (2).

2. Procédé selon la revendication 1,
**caractérisé en ce qu'**
on enregistre les données tout d'abord sur un moyen d'enregistrement (4) et ensuite on les exploite dans une installation fixe de traitement de données telle que l'ordinateur PC (1) de la ferme.

3. Procédé selon l'une ou plusieurs des revendications précédentes,
**caractérisé en ce que**
par comparaison des valeurs de consigne et des valeurs réelles on détermine l'efficacité respective des opérations d'épandage effectivement réalisées.

4. Procédé selon l'une ou plusieurs des revendications précédentes,
**caractérisé en ce que**
par la comparaison entre les valeurs réelles et les valeurs de consigne on vérifie si le champ a été travaillé sans laisser d'intervalles et/ou s'il a été travaillé plusieurs fois dans des zones partielles.

5. Procédé selon l'une ou plusieurs des revendications précédentes,
**caractérisé en ce que**
dans le cas de l'utilisation d'une machine distributrice en forme d'épandeur d'engrais, le système d'ordinateur embarqué (4) contient les voies de passage réalisées dans le champ à amender par un semoir et on vérifie si chaque voie de passage a été parcourue une fois et/ou si le produit a été distribué.

6. Procédé selon la revendication 1,
**caractérisé en ce que**
pour établir les données de distribution pour l'opération de distribution et/ou de travail suivante, on tient compte du résultat de la vérification.

7. Procédé selon l'une ou plusieurs des revendications précédentes,
**caractérisé en ce qu'**
on compare la surface effectivement travaillée à la surface théorique à travailler.

8. Procédé selon l'une quelconque des revendications précédentes,
**caractérisé en ce que**
pour une opération d'ensemencement on enregistre les quantités distribuées et en fonction des quantités de semences distribuées, des résultats des récoltes des années précédentes et/ou de la carte des valeurs du sol, on fixe les données pour l'opération de travail ou d'épandage à effectuer maintenant.

9. Procédé selon l'une ou plusieurs des revendications précédentes,
**caractérisé en ce que**
l'on compare la quantité totale théorique distribuée et la quantité effectivement distribuée et à partir de cette comparaison on tire des conclusions concernant les travaux d'épandage futurs.

10. Procédé selon l'une ou plusieurs revendications précédentes,
**caractérisé en ce que**
pour l'établissement des cartes d'application en particulier pour tenir compte du travail spécifique à chaque surface partielle et de la régulation de la quantité à distribuer de manière spécifique suivant les largeurs partielles, on tient compte de la portée d'un épandeur centrifuge pour l'éventail d'épandage généré par chaque disque d'épandage.
